# EUROPEAN PATENT SPECIFICATION

(11) **EP 1 238 440 B1**
(45) Date of publication and mention of the grant of the patent: **24.03.2004**
(21) Application number: 00980101.0
(22) Date of filing: 03.11.2000
(51) Int. Cl.: H01M 10/40

(54) **METHOD FOR MANUFACTURING A RECHARGEABLE 3V LI-ION BATTERY**
VERFAHREN ZUR HERSTELLUNG EINER AUFLADBAREN 3V LI-IONENBATTERIE
PROCEDE DE FABRICATION DE PILES RECHARGEABLES DE 3 V AUX IONS LITHIUM

(30) Priority: 04.11.1999 NL 1013484
(43) Date of publication of application: 11.09.2002
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: SAAKES, Michel, 7316 BC Apeldoorn (NL)
(74) Representative: Prins, Adrianus Willem
(86) International application number: PCT/NL2000/000801
(87) International publication number: WO 2001/033657

(56) References cited:
- EP-A- 0 614 239
- WO-A-96/27908
- WO-A-98/26467
- US-A- 4 423 125
- US-A- 5 316 876
- PATENT ABSTRACTS OF JAPAN vol. 1999, no. 12, 29 October 1999 (1999-10-29) -& JP 11 195427 A (FUJITSU LTD), 21 July 1999 (1999-07-21)
- AURBACH D ET AL: "Recent studies on the correlation between surface chemistry, morphology, three-dimensional structures and performance of Li and Li-C intercalation anodes in several important electrolyte systems" JOURNAL OF POWER SOURCES,CH,ELSEVIER SEQUOIA S.A. LAUSANNE, vol. 68, no. 1, 1 September 1997 (1997-09-01), pages 91-98, XP004100204 ISSN: 0378-7753
- AURBACH D ET AL: "THE CORRELATION BETWEEN THE SURFACE CHEMISTRY AND THE PERFORMANCE OF LI-CARBON INTERCALATION ANODES FOR RECHARGEABLE ''ROCKING-CHAIR'TYPE BATTERIES" JOURNAL OF THE ELECTROCHEMICAL SOCIETY,US,ELECTROCHEMICAL SOCIETY. MANCHESTER, NEW HAMPSHIRE, vol. 141, no. 3, 1 March 1994 (1994-03-01), pages 603-611, XP000449725 ISSN: 0013-4651

## Description

The present invention relates to a method for manufacturing a rechargeable 3V Li-ion battery.

Such a battery is known in AA size (pen-light size) with an electrolyte consisting of 1 M LiAsF₆ (lithium hexafluoroarsenate) in DN (1,3-dioxolane) as solvent and TBA (tributylamine) as stabilizer. This battery functions well with Li metal as anode. The electrolyte therein distinguishes itself in a positive sense in that, when the battery is being charged, hardly any dendrites are formed in the deposition of Li metal and in that the electrolyte is intrinsically safe. Intrinsically safe means that the electrolyte, when the battery is abused, for instance overcharged, discharged too deeply, shortcircuited, unduly heated and mechanically damaged, polymerizes very fast, such that the current decreases strongly as a result of the increase of the internal resistance of the battery. The reason of the polymerization is that more protons are released than can be neutralized by the TBA present, thus yielding an excess of free protons, as a result of which the DN present polymerizes through a proton-catalyzed reaction. A further reason for this polymerization resides in the strong heat development as a result of shortcircuiting or overcharging of the battery. The potency of the known battery is relatively high and can attain a specific energy of more than 200 Wh/kg, which satisfies the long-term USABC (US advanced battery consortium) requirement.

The disadvantage of the known battery is that with a lithium anode the cyclic life of 350 discharge cycles at 100% DOD (depth of discharge) is too low for a number of applications, such as, for instance, in hybrid vehicles where 600 discharge cycles at a minimum are required. In this connection, the end of the cyclic life is defined as the moment when the discharge capacity has become equal to 80% of the discharge capacity in the first discharge cycle.

Another disadvantage resides in the relatively long charging time of about 10 hours. Although a reduction thereof is possible with a higher charging current, this leads in practice to a shorter life and hence a lesser number of discharge cycles.

Yet another disadvantage is the decrease of the discharge capacity. Naturally, not only the capacity but also the (practically feasible) density of the electrode material and the CE (current efficiency) value are relevant. The CE value is the ratio between the amount of charge that is stored and the amount of charge that is released again. In the known battery, the CE value for metallic Li in the electrolyte used is approximately 99%, that is to say that during each cycle approximately 1% of the charge is lost. This would mean that after about 100 cycles, all Li would be consumed; to prevent this, an excess of Li must then be used. Since metallic Li is strongly reactive, clear limits have been imposed for safety reasons. In terms of used quantity of lithium, the following applies: given, for instance, a capacity of 800 mAh (0.8 Ah) for an AA size battery, 1% of the charge equals 0.008Ah, or 28.8 Coulomb. Metallic lithium has a specific capacity of 3.84 Ah/g. This means that a loss of 1% during each cycle during charging corresponds to a loss of 0.008/3.84 = 0.0021 g lithium metal. Accordingly, after 100 cycles 0.21 g of Li has been consumed. In practice, an excess of 1.0 g of lithium in the battery is then found to correspond to about 476 cycles of 100% DOD. Naturally, the real number of cycles is lower (about 350) because the Li metal anode cannot be consumed completely since it also functions as electrical conductor. A further increase of the CE value beyond the approximate 99% could yield more cycles but this has been found to be impossible in practice.

The object of the invention is therefore to provide a method for manufacturing a rechargeable 3V Li-ion battery as described in the opening paragraph hereof, whereby the obtained battery is intrinsically safe, has a considerably longer life, preferably in excess of 600 cycles at 100% DOD, a faster charging time, preferably in the order of 1 to 2 hours, and a CE value higher than 99%, preferably higher than 99.9%.

According to the invention, this object is achieved when the anode is manufactured from graphite and is introduced into an electrolyte solution composed on the basis of DN (1,3-dioxolane), with one or more stable salts not polymerizing with DN, such as LiAsF₆ (lithium hexafluoroarsenate) or LiClO₄ (lithium perchlorate), there having been added to the electrolyte solution TBA (tributylamine) as stabilizer, as well as additives in a concentration of less than 5 %, such as EC (ethylene carbonate), gamma-BL (gamma-butyrilactone) or VC (vinylene carbonate), in a concentration such that the intrinsic safety of the battery is maintained, and that further the anode is provided with a SEI (solid electrolyte interface) film with Li-ion conducting properties.

JP 11 195 427 A relates to a rechargeable Li-ion battery containing a non-aqueous electrolyte solution. The solution contains an acid residue other than As, an organic solution and a polymerisation inhibitor.

It has been found that with a graphite anode without SEI layer in an electrolyte without additives, the disadvantages mentioned cannot be prevented in any manner. On the contrary, the use of merely a graphite anode led to greater problems, since, for instance, an intrinsically safe LiAsF₆ electrolyte with DN as solvent and TBA as stabilizer, though eminently suitable for Li metal, has been found to be totally unsuited for graphite. The DN present, due to the absence of a suitable additive, has been found to be entirely unsuitable to be able to function with graphite. This last fact was already known as such, while the following explanation could be given: DN does not form an SEI film on the graphite during the first time that Li ions are stored in the graphite. The SEI is an extremely thin film (in the order of 0.05 µm) with Li-ion conducting properties. During intercalation (charging of the battery) Li ions diffuse through the SEI film into the graphite, while during deintercalation (discharging of the battery) Li ions diffuse from the graphite. Since DN does not have the property of forming this absolutely necessary SEI film, utilizing the available kinds of graphite, such as KS44, it is impossible to use the electrolyte in combination with graphite. Adapting the salt used, in this case LiAsF₆, by means of, for instance, LiPF₆ (lithium hexafluorophosphate), which salt is used most in 4V batteries, has been found to be impossible because LiPF₆ reacts directly with DN because of the formation of a proton excess, which means a direct polymerization of the DN present, under strong heat development. However, because of the intrinsic safety, the DN must nonetheless be strictly maintained in the formulation of the electrolyte in the 3V battery.

As a first requirement, the intrinsic safety must be maintained. This means that only low percentages of highly active additives can be used. If higher percentages are used, no polymerization of DN occurs, so that the intrinsic safety is affected. It has been found in practice that percentages of additives of 5% or less lead to maintenance of the intrinsic safety of the electrolyte.

In making graphite anodes, different techniques can be used. Although the 'Doctor BLADE' method can be used for this purpose, use has been made of the technique of spray-coating. This has the advantage that a particularly good bonding of the graphite/PVDF (poly(vinylidene difluoride)) mixture (90:10 wt.%) used was obtained. To that end, beforehand, a particular amount of PVDF was introduced as solid into the solvent NMP (1-methylpyrrolidinone) used. After ultrasonic dissolution of PVDF the graphite powder was added, whereafter it was mixed ultrasonically with the PVDF/NMP solution. As electric conductor, use was made of a very thin copper foil (25 µm), provided with a rough surface structure to improve bonding.

The use of graphite as anode material imposes very specific requirements on this material. Very special graphites are being marketed to serve as electrode material for 4V Li-ion batteries, because requirements such as specific surface and lattice distance between the graphite layers are to be met within stringent margins.

A test with graphite KS44™ and a solution of 50% DN+50% EC (ethylene carbonate) did show a reversible behavior for the intercalation of Li ions into the graphite, but exhibited an irreversible loss of 51.6%, occurring only in the first cycle, as a result of the formation of an SEI layer during the first intercalation, which was considered unacceptably high. Upon use of graphite SLM44™ in a solution of 50% DN+50% EC, no deintercalation behavior whatever was found, which means that no good SEI film is formed. Because the percentage (50%) of the additive was too high, it was decided to use another additive, VC (vinylene carbonate), in a concentration of 10% and 5% for two different kinds of graphite, viz. SLM44™ and Melblon™ (bar-shaped graphite). At 5% VC, for SLM44™ an irreversible loss of 28.9% was found. A strongly reduced irreversible loss of only 4.0% was found for Melblon™ when using 10% VC and 90% DN in 1 M LiAsF₆. The cyclic life, however, was found to be less than 10 cycles. Nor did the use of THF (tetrahydrofuran) as additive with Melblon™ as graphite lead to any improvement: at 10% THF and 90% DN an irreversible loss of 22.7% and a cyclic life of less than 3 cycles were found. With 5% and 10% EC, the use of Melblon led only to intercalation of lithium in the first cycle, while deintercalation did not occur. The net result was therefore no cycles.

The use of a KS44™ graphite, though, led to another possible solution of the problem. To that end, first an SEI film was formed in 50% DN+50% EC in 1 M LiAsF₆. During the first intercalation, as already mentioned, there occurred an unacceptable irreversible loss of 51.6%. By presently placing this SEI-coated and deintercalated graphite electrode in 100% DN, in the first cycle in pure DN a deintercalation capacity was found that was only 0.6% lower than the deintercalation capacity in 50% EC+50% DN. It has thus been established that the prior application of an SEI film is a possible solution.

Because many known graphite types exhibit no or a poorly reversible cycling behavior, use has been made of adapted natural graphite LIB010 (E-SLM 5-44). This type of graphite was tested with 10, 5, 4, 2, 1 and 0.4% EC as additive. Both the LiAsF₆ used, and the DN and EC used, were of 'battery grade' quality. The results at very low percentages of additive (factor of 5-100 lower than in conventional electrolytes for 4V Li-ion batteries) were extremely surprising. Using 10% EC+90% DN, an irreversible loss of 22.4% was found. The cyclic life was 51 cycles, while the discharge capacity had only decreased to 98.8%. However, the percentage of 10% EC was not acceptable in view of the loss of intrinsic safety. Therefore it was decided to lower the percentage of EC further. At 5% EC+95% DN a cyclic life of 156 cycles was found (discharge capacity had decreased to 80%) with an irreversible loss of 19.3%. Although the behavior meant a great advance, the number of cycles of 156 was still greatly insufficient for various applications. The percentage of EC was therefore lowered further to 4%. At 4% EC+96% DN in 1 M LiAsF₆ a cyclic life of 450 cycles was found, while the discharge capacity had decreased to 80% of the discharge capacity of the first cycle. The irreversible loss had decreased to 17.5%. Thereupon it was decided to test LIB010 with 2% EC+98% DN. Then it was found that after 800 cycles the discharge capacity was still 85% of the discharge capacity in the first cycle. The irreversible loss of 19.7% here corresponds very closely to that of comparable systems in 4V Li-ion batteries. This finding means that a very good cyclability of 800 cycles at a minimum is possible with adapted natural graphite LIB010 in an intrinsically safe electrolyte composition.

Naturally, also the influence of a further lowering of the EC concentration was investigated. At 1% EC+99% DN an irreversible loss of 18.9% was measured, while after 98 cycles still not any decrease of the discharge capacity had occurred. Upon use of 0.4% EC+99.6 DN an irreversible loss of 19.4% was found, while after 42 cycles the discharge capacity had decreased to 99%. All this means that the use of graphite LIB010 with EC as additive at very low concentrations, preferably about 1 to 2%, yields an eminent cyclability which amply satisfies the criterion of 600 cycles, while the irreversible loss is less than 20%, which is acceptable. Absence of EC was tested by cycling LIB010 in 100% DN in 1M LiAsF₆; the irreversible loss was 39% (not acceptable), while in the second deintercalation the capacity had already decreased to 77.9%. This means that not more than 2 cycles are achieved in 100% DN. This underscores the superior action of EC in combination with LIB010.

According to the invention, besides EC, other additives are possible. Thus, when using graphite LIB010 and a 1M LiAsF₆ electrolyte in DN, there can be used, as additive, PC (propylene carbonate), gamma-BL(gamma-butyrolactone) or VC (vinylene carbonate). PC at 2%, surprisingly, still led to cyclability (after 9 cycles even an increase of the discharge capacity of 16.5% was found), while a very acceptable irreversible loss of 20.7% was obtained. THF also led to cyclability: at 5% THF+95% DN, after 32 cycles a discharge capacity was measured which had even increased by 14.5%. The irreversible loss was 20.7%. Another additive, gamma BL, was tested with 5, 2 and 1% addition. At 5%, a decrease of 0.5% of the discharge capacity was measured after 40 cycles, while the irreversible loss was 17.5%. At 2%, a decrease of 0.3% was found after 49 cycles, while the irreversible loss was equal to 20.3%. At 1%, the discharge capacity decreased to 77.3% after 300 cycles. Although this number of cycles is too low for a battery intended for hybrid vehicles, gamma-BL does lead to a strong increase of the cycling behavior and therefore has very good utility for applications where this cycling behavior is not required to be so high, such as, for instance, for batteries in portable telephones.

Since in addition to the cyclability, the irreversible loss as a result of the formation of the SEI film is a very important parameter, the nucleation that occurs during the formation of the SEI layer was influenced. To that end, as a model system, the graphite LIB010 was taken, with 2% EC+98% DN as solution in 1 M LiAsF₆ (more than 800 cycles). To positively influence the formation of the SEI layer, the procedure was as follows. In the formation of the SEI layer, precipitation of an Li ion conducting layer occurs. To allow this precipitation to proceed with as low an activation energy as possible, nucleation seeds are presented, such that the formation of the SET layer entails as little loss as possible. To that end, two routes were used:
1. mixing seeds in the electrode and
2. passing through a gas giving rise to the formation of seeds on the electrode.

Route 1. Mixing Li₂CO₃ of 99.999% purity through the graphite electrode (percentage of Li₂CO₃ with respect to percentage LIB010 had been made equal to 10, 1, 0.3 and 0.2%, respectively. Surprisingly, it was found that there was an optimum concentration for the Li₂CO₃ addition: the percentage of irreversible loss for the given concentration was, respectively, 24.0; 20.9; 16.5 and 23.7%. At 0.3% Li₂CO₃, and compared with 2% EC+98% DN, a reduction of 3.2% of the irreversible capacity was achieved. Use of 0.3% Li₂CO₃ at 2% EC+98% DN even gave an increase of the discharge capacity of 10% after 43 cycles. This means that mixing of Li₂CO₃ with the graphite does not adversely affect the cycling behavior in any way, but, rather, improves it.

Route 2, which was pursued to reduce the irreversible loss, was the use of extremely pure gaseous CO₂, which was passed through the solution of 2% EC+98% DN immediately prior to the first intercalation. This led to the most surprising result: the irreversible loss decreased to 15.0%, which was a reduction of 4.7% with respect to the initial situation. After 33 cycles, the discharge capacity decreased to 97.9%, which does not point to a negative influence on the cycling behavior. Naturally, in a practical implementation, the addition of a solid component is easier to carry out than is the addition of a gaseous component. However, passing through the CO₂ gas yields an optimum concentration thereof in the electrolyte.

In addition to the use of solid and liquid additives to improve cycling behavior, it may be favorable to use only a gaseous component as additive. To that end, three different graphites were tested in 1 M LiAsF₆ in DN with TBA as stabilizer, while pure CO₂ gas (purity >99.993%) was passed through. Of the tested graphite types Melblon™, LIB010 and Asbury#3427™, only Asbury#3427™ gave a very surprising result: without addition of other additives (100% DN in 1 M LiAsF₆) a cyclability of 199 cycles was achieved, whereafter the discharge capacity had decreased to 63.4%. This is a very surprising result, since no organic additive is required. For applications with a limited cyclability, this is a very useful result.

## Claims

1. A method for manufacturing a rechargeable 3V Li-ion battery, **characterized in that** the anode is manufactured from graphite and is introduced into an electrolyte solution composed on the basis of DN (1,3-dioxolane), with one or more stable salts not polymerizing with DN, such as LiAsF₆ (lithium hexafluoroarsenate) or LiClO₄ (lithium perchlorate), there having been added to the electrolyte solution TBA (tributylamine) as stabilizer, as well as additives in a concentration of less than 5%, and that further the anode is provided with an SEI (solid electrolyte interface) film with Li-ion conducting properties.

2. A method according to claim 1, **characterized in that** one or more additives from the following group of additives are added: EC (ethylene carbonate), PC (propylene carbonate), THF (tetrahydrofuran), gamma-BL (gammabutyrolactone), VC (vinylene carbonate), CO₂ and Li₂CO₃.

3. A method according to claim 2, **characterized in that** the percentage of additives is equal to 1 to 2%.

4. A rechargeable 3V Li-ion battery manufactured according to any one of the preceding claims

## Patentansprüche

1. Methode zur Herstellung einer wiederaufladbaren 3V-Li-Ionenbatterie, **dadurch gekennzeichnet, daß** die Anode aus Graphit hergestellt wird und in eine Elektrolytlösung eingeführt wird, die auf Basis von DN (1,3-Dioxolan), mit einem oder mehreren stabilen Salzen, die nicht mit DN polymerizieren, sowie LiAsF₆ (Lithiumhexafluorarsenat) oder LiClO₄ (Lithiumperchlorat) zusammengesetzt ist, wobei zu der Elektrolytlösung TBA (Tributylamin) als Stabilisator sowie Additive in einer Konzentration von weniger als 5% hinzugefügt worden sind, und daß die Anode ferner mit einem SEI-Film (fester Elektrolytgrenzflächenfilm) mit Li-ionen leitenden Eigenschaften versehen ist.

2. Verfahren gemäß Anspruch 1, **dadurch gekennzeichnet, daß** ein oder mehrere Additive aus der folgenden Gruppe von Additiven zugegeben wurden: EC (Ethylencarbonat), PC (Propylencarbonat), THF (Tetrahydrofuran) , gamma-BL (Gamma-Butyrolacton), VC (Vinylencarbonat), CO₂ und Li₂CO₃.

3. Verfahren gemäß Anspruch 2, **dadurch gekennzeichnet, daß** der Prozentsatz an Additiven gleich 1 bis 2% ist.

4. Wiederaufladbare 3V-Li-Ionenbatterie, hergestellt gemäß einem der vorhergehenden Ansprüche.

## Revendications

1. Procédé de fabrication de piles rechargeables de 3 V aux ions lithium, **caractérisé en ce que** l'anode est réalisée en graphite et introduite dans une solution électrolytique à base de DN (1,3-dioxolane), avec un ou plusieurs sels stables ne polymérisant pas avec le DN, tels que LiAsF₆ (hexafluoroarséniate de lithium) ou LiClO₄ (perchlorate de lithium), la solution électrolytique étant additionnée de TBA (tributylamine) en tant qu'agent stabilisant, ainsi que d'additifs à une concentration inférieure à 5 %, et **en ce que** l'anode possède en outre un film SEI (interface solide-électrolyte) présentant des propriétés de conduction des ions Li.

2. Procédé selon la revendication 1, **caractérisé en ce que** sont ajoutés un ou plusieurs des additifs faisant partie du groupe suivant : EC (carbonate d'éthylène), PC (carbonate de propylène), THF (tétrahydrofurane), gamma-BL (gammabutyrolactone), VC (carbonate de vinylène), CO₂ et Li₂CO₃.

3. Procédé selon la revendication 2, **caractérisé en ce que** le pourcentage d'additifs est compris entre 1 et 2 %.

4. Pile rechargeable de 3 V aux ions lithium fabriquée selon l'une quelconque des revendications précédentes.
